# EUROPÄISCHE PATENTSCHRIFT

(11) **EP 2 937 203 B1**
(45) Veröffentlichungstag und Bekanntmachung des Hinweises auf die Patenterteilung: **01.08.2018**
(21) Anmeldenummer: 15165096.7
(22) Anmeldetag: 24.04.2015
(51) Int. Cl.: B29C 49/48

(54) **BLASFORMMASCHINE UND -VERFAHREN MIT AUTOMATISCH BETÄTIGBARER BODEN- UND/ODER SEITENANKOPPLUNG**
BLOW MOULDING MACHINE AND METHOD WITH AN AUTOMATICALLY OPERATED GROUND AND/OR SIDE COUPLING
MACHINE ET PROCÉDÉ FORMAGE PAR SOUFFLAGE AVEC ACCOUPLEMENT DE SOL ET/OU CÔTÉ AUTOMATIQUE

(30) Priorität: 24.04.2014 DE 102014105762
(43) Veröffentlichungstag der Anmeldung: 28.10.2015
(73) Patentinhaber: Krones AG, 93073 Neutraubling (DE)
(72) Erfinder: Geltinger, Florian, 93073 Neutraubling (DE); Schwoed, Gerhard, 93073 Neutraubling (DE)
(74) Vertreter: Bittner, Bernhard

(56) Entgegenhaltungen:
- US-A1- 2011 223 275

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt.

Dabei werden üblicherweise erwärmte Kunststoffvorformlinge einer Blasformeinrichtung, wie insbesondere einer Streckblasmaschine, zugeführt und von dieser zu Kunststoffbehältnissen expandiert.

Diese Blasformmaschinen weisen dabei üblicherweise eine Vielzahl von Blasstationen auf, die wiederum mit Blasformen ausgestattet sind, in deren Innerem die Kunststoffvorformlinge durch Beaufschlagung mit Druckluft zu den Kunststoffbehältnissen und insbesondere zu Kunststoffflaschen umgeformt werden. Im Betrieb derartiger Vorrichtungen ist es oftmals jedoch erforderlich, die Blasformeinrichtungen auszuwechseln. Dies kann beispielsweise nötig sein, wenn von einer bestimmten Behältnisgattung auf eine andere Behältnisgattung bzw. Behältnisform umgestellt werden soll.

Diese Umstellung ist dabei im Stand der Technik ein relativ aufwendiger Prozess, da an jeder der einzelnen Umformungsstationen jeweils die Blasformen eingewechselt werden müssen. Dies erfolgt im Stand der Technik üblicherweise unter Verwendung von Werkzeugen, wie beispielsweise Schraubenziehern und dergleichen.

Die DE 10 2010 048 720 A1 beschreibt eine schnell montierbare Bodenform mit einer zusätzlichen Haltekraftunterstützung. Dabei kann hier mittels einer Drehbewegung eines Arretierelements ein Lösen des Bodenteils der Blasform von einem Träger erreicht werden.

Die EP 1 299 223 B1 beschreibt eine Vorrichtung zur Blasformung von Behältern. Bei dieser Vorrichtung findet ein Handhebel zum Lösen des Bodenteils Anwendung. Durch diesen Handhebel wird jedoch eine automatisierte Lösung des Bodenteils verhindert.

Aus der US 2011/0223275A1 ist eine Vorrichtung zum Anbringen eines Formbodens einer Blasform an einem Medium bekannt.

Bei manchen Blasformeinrichtungen ist es im Rahmen des Herstellungsprozesses nötig oder vorteilhaft, wenn deren Wandungen temperiert, beispielsweise gekühlt werden. Zu diesem Zweck weisen die entsprechenden Blasformeinrichtungen bzw. deren Seitenteile oder deren Bodenteile Temperierkanäle auf, innerhalb derer ein Temperiermedium fließen kann. Diese Temperierkanäle werden dabei an eine Kühlmittelversorgung, beispielsweise an eine Wasserversorgung, angeschlossen und so kann im Arbeitsbetrieb die Temperierung erreicht bzw. aufrechterhalten werden.

Der vorliegenden Erfindung liegt die Aufgabe zugrunde, eine Vorrichtung und ein Verfahren zur Verfügung zu stellen, welche einen vergleichsweise schnellen Wechselvorgang der Blasformeinrichtung ermöglichen und welche bevorzugt auch ein zumindest teilautomatisches Wechseln von Blasformteilen ermöglichen sollen.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Umformungsstation auf, welche wiederum eine Blasform aufweist, innerhalb derer die Kunststoffvorformlinge durch Beaufschlagung mit einem gasförmigen Medium expandierbar sind. Dabei weist die Blasform ein Bodenteil auf, welches lösbar (und zumindest mittelbar) an einem Träger angeordnet ist. Weiterhin weist die Vorrichtung einen Befestigungsmechanismus auf, um die Blasform und insbesondere das Bodenteil an diesem Träger zu befestigen.

Weiterhin weist die Vorrichtung, insbesondere die Umformungsstation wenigstens eine erste Anschlusseinrichtung auf, um der Vorrichtung, insbesondere der Umformungsstation und insbesondere auch dem Bodenteil ein fließfähiges Temperiermedium zuzuführen, wobei diese Zuführung des Temperiermediums über die Anschlusseinrichtung (insbesondere mittels einer durch die Anschlusseinrichtung tretenden Strömung) durch eine Entfernung bzw. eine Entfernungsbewegung des Bodenteils von dem Träger trennbar bzw. unterbrechbar ist.

Erfindungsgemäß weist dieser Befestigungsmechanismus ein in einer vorgegebenen geraden Richtung verschiebbares Löseelement auf, wobei durch eine Verschiebung dieses Löseelementes in eine erste vorgegebene Position die Befestigung des Bodenteils an dem Träger lösbar ist und durch eine Verschiebung dieses Löseelementes in eine zweite vorgegebene Position das Bodenteil an dem Träger befestigbar ist.

Es wird daher vorgeschlagen, dass die Befestigung des Bodenteils bzw. ein Lösen dieser Befestigung durch eine geradlinige Bewegung dieses genannten Löseelementes erreicht wird. Diese besagte geradlinige Bewegung kann auf relativ einfache Weise etwa durch pneumatische Mittel erreicht werden. Auf diese Weise kann ein automatisiertes Entfernen des Bodenteils von der Blasform erreicht werden. Vorteilhaft handelt es sich bei dem Löseelement um ein Stellelement, welches zumindest mittelbar eine Arretierung der Befestigung bzw. ein Lösen dieser Arretierung bewirkt. Dabei ist es möglich, dass durch dieses Löseelement bzw. Stellelement wiederum ein weiteres Element betätigt bzw. bewegt wird, und durch diese Betätigung die Arretierung bzw. Lösung der Arretierung erreicht wird. Bevorzugt kann daher das Stellelement zum Arretieren in eine erste Richtung bewegt werden und zum Lösen der Arretierung in eine zweite Richtung, welche der ersten Richtung entgegengesetzt ist.

Wie oben erwähnt, ist es bei der Fertigung der Behältnisse teilweise erforderlich, dass die jeweiligen Blasformen bzw. auch deren Bodenteile temperiert und insbesondere gekühlt werden. Zu diesem Zweck dient die hier beschriebene Anschlusseinrichtung, mittels derer letztlich das Bodenteil an eine Temperiermittel- und insbesondere eine Wasserversorgung angeschlossen werden kann. Durch eine Entfernung des Bodenteils von dem Träger kann damit (insbesondere im Wesentlichen gleichzeitig) auch die Temperiermittelversorgung unterbrochen werden.

Eine weitere erfindungsgemäße Vorrichtung zum Umformen von Kunststoffvorformlingen zu Kunststoffbehältnissen mit wenigstens einer Umformungsstation, welche eine Blasform aufweist, innerhalb derer die Kunststoffvorformlinge durch Beaufschlagung mit einem gasförmigen Medium expandierbar sind, wobei die Blasform wenigstens ein Seitenteil aufweist, welches lösbar an einem Träger angeordnet ist und mit einem Befestigungsmechanismus, um das Seitenteil an dem Träger zu befestigen.

Erfindungsgemäß weist dieser Befestigungsmechanismus ein in einer vorgegebenen geraden Richtung verschiebbares Löseelement auf, und durch eine Verschiebung dieses Löseelements in eine erste vorgegebene Position ist die Befestigung des Seitenteils an dem Träger lösbar und durch eine Verschiebung dieses Löseelements in eine zweite vorgegebene Position ist das Seitenteil an dem Träger befestigbar.

Es wird also im Rahmen der Erfindung für die Befestigung des Seitenteils bzw. der Seitenteile der gleiche Mechanismus vorgeschlagen wie für das Bodenteil. Im Rahmen der nachfolgenden Figurenbeschreibung wird der Befestigungsmechanismus des Bodenteils beschrieben. Ein entsprechender Befestigungsmechanismus wird auch zur Befestigung der Seitenteile verwendet. Dieser Befestigungsmechanismus ist jedoch im Einbauzustand gegenüber dem Befestigungsmechanismus des Bodenteils im Wesentlichen um 90° gedreht. Bevorzugt sind zwei derartige Befestigungsmechanismen zum Halten der Seitenteile vorgesehen (pro Seitenteil ein Befestigungsmechanismus).

Der hier beschriebene Befestigungsmechanismus bietet den Vorteil, dass er eine automatische Lösung und/oder Befestigung des Seitenteils bzw. Bodenteils von bzw. an dem Träger ermöglicht. Bevorzugt handelt es sich bei dem Träger des Seitenteils um eine sog. Blasformträgerschale. Bei einem Einwechseln des Seitenteils kann diese Blasformträgerschale an einem Blasformträger befestigt bleiben und das Seitenteil wird von der Blasformträgerschale gelöst. Damit ist dieser Befestigungsmechanismus bevorzugt zwischen der Blasformträgerschale und dem Seitenteil ausgebildet.

Es wäre jedoch auch denkbar, dass dieser Befestigungsmechanismus zwischen dem Blasformträger und der Blasformträgerschale ausgebildet ist oder zwischen dem Blasformträger und dem Seitenteil. Bevorzugt ist das Seitenteil unmittelbar an der Blasformträgerschale angeordnet.

Bevorzugt weist dabei die Umformungsstation wenigstens eine erste Anschlusseinrichtung auf, um der Umformungsstation und insbesondere dem Seitenteil ein fließfähiges Temperiermedium zuzuführen, und diese Zuführung des Temperiermediums ist über die Anschlusseinrichtung durch eine Entfernung des Seitenteils von dem Träger trennbar. Es wird daher auch für das Seitenteil vorgeschlagen, dass dieses Temperierkanäle aufweist, durch welche ein Temperiermedium fließen kann, um so dieses Seitenteil zu temperieren, etwa zu kühlen.

Im Folgenden wird die Ausgestaltung dieser Temperierung und auch des Befestigungsmechanismus überwiegend unter Bezugnahme auf das Bodenteil beschrieben. Es wird jedoch darauf hingewiesen, dass diese Ausgestaltungen entsprechend auch auf die Befestigung des Seitenteils anwendbar sind.

Bei einer vorteilhaften Ausführungsform ist das Bodenteil über wenigstens einen Zwischenträger an dem genannten Träger angeordnet. Dabei ist es möglich, dass an dem Bodenteil der Zwischenträger angeordnet ist und dieser beispielsweise auch als Abstandshalter fungiert. Auch kann bevorzugt an diesem Zwischenträger, ggf. jedoch auch an dem Bodenteil selbst, ein Befestigungsteil angeordnet sein und an diesem Befestigungsteil wiederum ein Teil des Befestigungsmechanismus.

Bei einer weiteren vorteilhaften Ausführungsform weist, wie oben ausgeführt die Vorrichtung bzw. die Umformungsstation auch zwei Seitenteile auf, welche bevorzugt gemeinsam mit dem Bodenteil den Hohlraum begrenzen, innerhalb dessen die Kunststoffvorformlinge zu den Kunststoffbehältnissen umgeformt werden.

Vorteilhaft sind auch die oben erwähnten Seitenteile der Blasformeinrichtung jeweils an einem Blasformträger angeordnet. Bevorzugt sind dabei die Seitenteile an Blasformträgerschalen angeordnet und diese Blasformträgerschalen wiederum an Blasformträgern. Vorteilhaft sind die Blasformträger, an denen die Seitenteile angeordnet sind, um eine Schwenkachse, insbesondere eine gemeinsame Schwenkachse schwenkbar, um auf diese Weise die Blasformeinrichtung zu öffnen und zu schließen. Vorteilhaft verläuft dabei diese Schwenkachse parallel zu der Längsrichtung eines Kunststoffvorformlings bzw. auch eines hieraus herzustellenden Kunststoffbehältnisses.

Vorteilhaft weist die Vorrichtung weiterhin eine Beaufschlagungseinrichtung auf, um die Kunststoffvorformlinge mit einem fließfähigen und insbesondere mit einem gasförmigen Medium (insbesondere mit Druckluft) zu beaufschlagen. Bei dieser Beaufschlagungseinrichtung handelt es sich vorteilhaft um eine Blasdüse, welche an den Kunststoffvorformling angesetzt werden kann, um diesen so zu expandieren. Vorteilhaft ist dabei die Beaufschlagungseinrichtung mittels einer Antriebseinrichtung auf den Kunststoffvorformling zustellbar. Bei einer weiteren vorteilhaften Ausführung weist die Vorrichtung auch ein stangenförmiges Element auf, welches in das Innere der Kunststoffvorformlinge einführbar ist, um diese in ihrer Längsrichtung zu dehnen. Damit weist die Vorrichtung bevorzugt eine sogenannte Reckstange auf und es handelt sich bei der Vorrichtung vorteilhaft um eine Streckblasmaschine.

Bei einer weiteren vorteilhaften Ausführungsform können die Seitenteile auch zum Schließen der Blasform in Bereiche des Bodenteils eingreifen. Bei einer weiteren vorteilhaften Ausführungsform weist die Vorrichtung eine Vielzahl von Umformungsstationen auf, die besonders bevorzugt an einem gemeinsamen Träger angeordnet sind. Dabei handelt es sich bei diesem Träger insbesondere um einen drehbaren Träger wie ein sog. Blasrad.

Vorteilhaft ist zwischen den Blasformträgerteilen und den Blasformteilen bzw. Seitenteilen wenigstens ein mit einem gasförmigen Medium beaufschlagbarer Raum ausgebildet. Auf diese Weise kann insbesondere ein Druckkissen ausgebildet werden, mittels dessen ein Blasformteil während des Expansionsvorganges auf das andere Blasformteil zugestellt werden kann. Vorteilhaft weist damit wenigstens ein Blasformteil gegenüber demjenigen Blasformträgerteil, an dem es angeordnet ist, ein gewisses mechanisches Spiel in einer Richtung auf, welche senkrecht zu einer Ebene steht, welche in einem geschlossenen Zustand der Blasform zwischen den beiden Blasformteilen definiert wird.

Bei einer weiteren vorteilhaften Ausführungsform ist das oben erwähnte Lösungselement automatisch betätigbar bzw. bewegbar. Vorteilhaft ist dieses Löseelement durch ein Fließmittel betätigbar, also insbesondere hydraulisch oder pneumatisch betätigbar. Es wäre jedoch auch denkbar, dass das Löseelement durch eine Magnetkraft betätigt wird. So wäre es denkbar, dass eine Robotereinrichtung vorgesehen ist, welche einen derartigen Wechsel des Bodenteils und/oder der Seitenteile automatisch durchführt. Dazu könnte zunächst der Befestigungsmechanismus gelöst und anschließend das betreffende Seitenteil entnommen werden. Vorteilhaft ist das Löseelement für einen Benutzer bzw. Bediener nicht zugänglich, ohne dass hierzu der Befestigungsmechanismus gelöst und das Blasformteil abgenommen wird, beispielsweise indem es innerhalb des erwähnten Trägers angeordnet ist.

Bevorzugt weist die erfindungsgemäße Vorrichtung die beschriebenen Befestigungsmechanismen sowohl für das oder die Seitenteile der Blasformeinrichtung als auch für das Bodenteil auf. So wäre es möglich, dass automatisiert sowohl die Befestigungen der Seitenteile als auch des Bodenteils gelöst oder hergestellt werden. Weiterhin wäre es denkbar, dass, insbesondere nach einem Lösen der jeweiligen Befestigungsmechanismen die Blasformeinrichtung in ihrer Gesamtheit von der Umformungsstation entnommen wird. Dabei wäre es insbesondere denkbar, dass weitere Arretiermechanismen vorgesehen sind, welche die Seitenteile und das Bodenteil der Blasform, insbesondere für einen Montage- und einen Demontagevorgang aneinander befestigen, damit die Blasformeinrichtung in einem zusammengesetzten Zustand montiert oder demontiert werden kann.

Weiterhinkann beispielsweise der Träger eine Kontaktfläche aufweisen, welche in einem montierten Zustand an einem zumindest mittelbar an dem Bodenteil (bzw. dem Seitenteil) befestigten Befestigungselement (bzw. einer entsprechenden Kontaktfläche dieses Befestigungselements anliegt und ein erster Bestandteil der Befestigungseinrichtung kann innerhalb dieser Kontaktfläche angeordnet sein. Bevorzugt ist in einem arretierten Zustand des Bodenteils bzw. des Seitenteils an dem Träger die Befestigungseinrichtung in Umfangsrichtung vollständig von Bereichen bzw. Material des Trägers umgeben. Vorteilhaft weist das Löseelement einen kreisförmigen Querschnitt auf.

Bei einer weiteren vorteilhaften Ausführungsform weist die Vorrichtung eine Führungseinrichtung auf, welche das Löseelement führt. Dabei kann beispielsweise ein Hülsenkörper vorgesehen sein, innerhalb dessen das Löseelement verschiebbar gelagert ist. Umgekehrt kann jedoch (bevorzugt) das Führungselement auch als stangenartiger Körper ausgebildet sein, der wiederum in das Löseelement eingreift und so eine Führung des Löseelementes bewirkt.

Vorteilhaft ist das Löseelement (welches zum Befestigen des Bodenteils dient) in der Längsrichtung der zu expandierenden Kunststoffvorformlinge betätigbar. Vorteilhaft handelt es sich hierbei um die gleiche Richtung, in der auch die oben erwähnte Reckstange in das Innere der Kunststoffvorformlinge eingeführt wird. Vorteilhaft ist das Löseelement (welches zum Befestigen des Seitenteils dient) im Wesentlichen senkrecht zu der Längsrichtung der zu expandierenden Kunststoffvorformlinge betätigbar. Im Falle der Befestigung der Seitenteile ist bevorzugt das Löseelement verschieblich an der Blasformträgerschale angeordnet.

Vorteilhaft kann durch eine Entfernung des Bodenteils bzw. des Seitenteils von dem jeweiligen Träger (im Falle des Seitenteils insbesondere der Blasformträgerschale) auch dieser Anschluss für das Temperiermedium bzw. das Kühlmittel getrennt werden. Bevorzugt kann in dem gleichen Arbeitsschritt, wenn auch nicht notwendig zeitgleich, sowohl das Bodenteil bzw. das Seitenteil von dem Träger gelöst als auch die Versorgung mit dem Temperiermedium unterbrochen werden. So ist bevorzugt möglich, dass beispielsweise das Bodenteil - ggf. gemeinsam mit einem an dem Bodenteil angeordneten Zwischenträger und/oder einem Befestigungselement - von dem Träger abgehoben und damit getrennt wird und durch den gleichen Vorgang auch die Verbindung(en) für das Temperiermedium unterbrochen werden. Bevorzugt können die Verbindungen für das Temperiermedium durch eine Zustellbewegung des Bodenteils auf den Träger zu hergestellt werden.

Bei einer weiteren vorteilhaften Ausführungsform ist das Bodenteil bzw. das Seitenteil nach einem Lösen des Befestigungsmechanismus durch eine Bewegung in einer geraden Richtung entfernbar. Vorteilhaft handelt es sich hierbei im Falle des Bodenteils bzw. des Seitenteils um die gleiche Richtung, in der auch das Löseelement bewegbar ist. Im Falle des Bodenteils kann es sich hierbei um eine Richtung handeln, die parallel zu der Längsrichtung der Kunststoffvorformlinge ist, im Falle des Seitenteils um eine Richtung, welche im Wesentlichen senkrecht zu der Längsrichtung der Kunststoffvorformlinge steht. Bevorzugt sind bewegliche Elemente der jeweiligen Befestigungsmechanismen wie insbesondere das Löseelement und/oder das Arretierelement an den jeweiligen Trägern angeordnet. Dies hat den Vorteil, dass diese Elemente bei einem Auswechseln der Blasformeinrichtungen an der Maschine verbleiben.

Bei einer weiteren vorteilhaften Ausführungsform weist die erste Anschlusseinrichtung ein erstes Anschlusselement auf sowie ein zweites Anschlusselement, welche durch eine Relativbewegung des einen Anschlusselementes gegenüber dem anderen Anschlusselement in einer geraden Richtung miteinander koppelbar sind, um der Umformungsstation und insbesondere dem Bodenteil bzw. dem Seitenteil der Blasformeinrichtung das fließfähige Temperiermedium zuzuführen. Durch diese An- und/oder Entkoppelbarkeit der Anschlusseinrichtungen ist es daher möglich, dass durch die gleiche Bewegung, nämlich eine Entfernungsbewegung der Blasform von dem Träger, auch die Anschlüsse getrennt werden und umgekehrt bei einer Zuführung des Blasformteils auf den Träger auch die Anschlusseinrichtungen bzw. deren Anschlusselemente miteinander verbunden werden.

Vorteilhaft weist wenigstens ein Anschlusselement und insbesondere ein Anschlusselement, welches zumindest mittelbar an dem Blasformteil angeordnet ist, eine Ventileinrichtung auf, welches bei einer Trennung der Anschlusselemente schließt, so dass nach dem Trennvorgang kein Temperiermedium aus dem Bodenteil strömen kann.

Mit anderen Worten kann durch eine Relativbewegung der Anschlusselemente bezüglich einander eine Fluidverbindung zwischen einer Temperiermittelversorgung und dem Bodenteil bzw. den Seitenteilen hergestellt bzw. auch unterbrochen werden.

Bei einer weiteren vorteilhaften Ausführungsform entspricht die erwähnte gerade Richtung auch der Entfernungsrichtung des Bodenteils bzw. des Seitenteils und/oder der Bewegungsrichtung des Löseelementes.

Bei einer weiteren vorteilhaften Ausführungsform weist das Löseelement einen stangenförmigen Körper auf und/oder einen Körper, der sich in der oben erwähnten Bewegungsrichtung des Löseelementes erstreckt.

Vorteilhaft erstreckt sich auch wenigstens ein Anschlusselement und besonders bevorzugt erstrecken sich beide Anschlusselemente in der oben erwähnten Richtung, in der auch das Löseelement bewegbar ist. Falls also, wie im Stand der Technik häufig der Fall, Kunststoffvorformlinge in einem stehenden Zustand in die Blasform eingebracht werden, wobei ihre Mündung nach oben ausgerichtet ist, erstrecken sich vorteilhaft (im Falle des Bodenteils) auch die Anschlusselemente in der Längsrichtung der Kunststoffvorformlinge und (im Falle des oder der Seitenteile) im Wesentlichen senkrecht zu dieser Längsrichtung. Bevorzugt sind die Anschlusselemente als Stecker und Kupplung ausgeführt.

Auf diese Weise ist ein Wechsel des Bodenteils und/oder des Seitenteils automatisch durchführbar. So kann beispielsweise mittels eines Wechselroboters das Bodenteil ergriffen werden und nach Lösen des Befestigungsmechanismus von dem Träger entnommen werden. Bevorzugt kann in dem gleichen Arbeitsgang auch die Temperiermittelverbindung gelöst werden. Durch die oben beschriebenen Vorgehensweisen ist eine automatische Betätigung des Löseelements möglich, insbesondere im Rahmen eines Wechselprozesses der Blasform. Dabei kann, wie oben erwähnt, das Löseelement automatisch bewegt werden.

Bei einer weiteren vorteilhaften Ausführungsform weist die Vorrichtung eine zweite Anschlusseinrichtung auf, um das Temperiermedium von dem Bodenteil abzuführen. Auf diese Weise kann das Bodenteil in einen Temperierkreislauf eingebunden werden. Vorteilhaft ist auch diese Zuführung durch eine Entfernung des Bodenteils trennbar. Dabei ist es auch hier bevorzugt, dass die zweite Anschlusseinrichtung zwei Anschlusselemente aufweist, welche durch eine Relativbewegung und insbesondere eine Relativbewegung in der oben beschriebenen Richtung miteinander verbindbar oder lösbar sind. Auf diese Weise ist es auch möglich, das Bodenteil automatisch in einen Temperierkreislauf einzubinden.

Bei einer weiteren vorteilhaften Ausführungsform sind die Anschlusseinrichtungen und/oder Anschlusselemente in der oben besagten Richtung, d.h. derjenigen Richtung, in der auch das Bodenteil von dem Träger abgenommen wird, versetzt zueinander angeordnet. Auf diese Weise ist es möglich, dass bei einer Montage des Bodenteils an dem Träger zunächst eine Anschlusseinrichtung betätigt bzw. angeschlossen wird und anschließend die andere. Auf diese Weise ist ein zeitlich versetztes Anschließen der beiden Anschlusseinrichtungen bzw. der jeweiligen Anschlusselemente an einen Temperierkreislauf möglich.

Durch eine federbelastete Anordnung des einen Anschlusselementes kann erreicht werden, dass bei einer Zustellung des Bodenteils an den Träger zunächst das jeweilige Anschlusselement bewegt wird, bevor es mit dem anderen Anschlusselement zusammenwirkt bzw. mit diesem zusammengeschlossen wird. Auch kann durch diese federbelastete Anordnung des Anschlusselements eine selbsttätige Rückstellung dieses Anschlusselements in eine vorgegebene Ausgangsposition erreicht werden.

Bei einer weiteren vorteilhaften Ausführungsform weist der Befestigungsmechanismus ein Arretierelement auf, welches durch eine Bewegung des Löseelementes in der Richtung zwischen wenigstens zwei Positionen bewegbar ist, wobei in einer dieser Positionen eine Arretierung zwischen dem Träger und dem Bodenteil bzw. dem Seitenteil hergestellt ist und in der anderen Position eine Arretierung zwischen dem Träger und dem Bodenteil bzw. dem Träger und dem Seitenteil gelöst ist.

So wäre es beispielsweise möglich, dass das Löseelement in der Längsrichtung der Kunststoffvorformlinge bewegt wird und hierdurch eine Querbewegung des Arretierelementes ausgelöst wird. Bevorzugt weist das Löseelement einen sich erweiternden Abschnitt, beispielweise einen sich kegelförmig erweiternden Abschnitt auf bzw. eine Schrägfläche, welche bevorzugt in Kontakt mit dem Arretierelement steht. Durch eine Bewegung des Löseelementes in der oben beschriebenen Richtung kann auf diese Weise auch eine Bewegung des Arretierelementes insbesondere in einer hierzu senkrechten oder schrägen Richtung erreicht werden.

Durch diese Bewegung des Arretierelementes ist es möglich, dass in Folge einer Bewegung des Löseelementes das Arretierelement in ein weiteres Element der Befestigungseinrichtung eingreift. Vorteilhaft sind das Arretierelement und besonders bevorzugt auch das Löseelement an dem Träger angeordnet. Ein entsprechender Hinterschnitt bzw. eine Eingriffsausnehmung, in welche das Arretierelement eingreifen kann, ist besonders bevorzugt zumindest mittelbar an dem Bodenteil, beispielsweise an dem Zwischenträger oder einem an dem Zwischenträger fest angeordneten Befestigungskörper angeordnet.

Bei einer weiteren vorteilhaften Ausführungsform ist das Arretierelement durch die Bewegung des Löseelementes in einer von der Bewegungsrichtung des Löseelementes abweichenden Richtung bewegbar.

Wie erwähnt, ist bevorzugt an dem Löseelement eine Schrägfläche, d.h. eine bezüglich der Längsrichtung ausgebildete Schrägfläche angeordnet, welche eine Kontaktfläche mit dem Arretierelement bildet.

Bei einer weiteren bevorzugten Ausführungsform ist es auch möglich, dass mehrere der beschriebenen Arretierelemente vorgesehen sind. Dabei ist es möglich, dass durch eine Bewegung des Löseelementes mehrere Arretierelemente gleichzeitig bewegt werden und beispielsweise in entsprechende Ausnehmungen eines Halteelementes eingeführt werden.

Auch könnte es sich bei dem Arretierelement um ein ringförmiges Element handeln, welches das Löseelement und insbesondere die Schrägfläche dieses Löseelements in dessen Umfangsrichtung umgibt. Bevorzugt ist das Arretierelement in einer bezüglich der Längsrichtung des Löseelements radial verlaufenden Richtung bewegbar. Bevorzugt kann das Arretierelement einen Abschnitt eines weiteren Befestigungselements und insbesondere eines an mittelbar an dem Bodenteil angeordneten Befestigungselements hintergreifen.

Bei einer weiteren vorteilhaften Ausführungsform ist die besagte Befestigungseinrichtung wenigstens abschnittsweise zwischen den Anschlusseinrichtungen angeordnet. So ist es beispielsweise möglich, dass die Befestigungseinrichtung bezogen beispielsweise auf eine Längsrichtung der Kunststoffvorformlinge in einem radial innenliegenden Bereich des Trägers und eine Befestigungselementes angeordnet ist. Auf diese Weise ist die Befestigungseinrichtung bevorzugt stets innerhalb des Trägers angeordnet und insbesondere von außen nicht zugänglich.

Bei einer weiteren vorteilhaften Ausführungsform weist die Befestigungseinrichtung einen Aufnahmeraum auf, der zur Aufnahme eines gasförmigen Mediums geeignet ist. Dieser Aufnahmeraum kann dabei mit einem Pneumatikmittel, beispielsweise mit Druckluft beaufschlagt werden, um so das Löseelement zu bewegen. So kann beispielsweise an dem Löseelement ein Kolben angeordnet sein, der innerhalb des besagten Aufnahmeraums angeordnet sind. Dieser Kolben kann mit Druckluft beaufschlagt werden, um so das Löseelement zu bewegen. Weiterhin ist es möglich, dass Dichtelemente vorgesehen sind, um den Kolben gegenüber dem Aufnahmeraum abzudichten.

Bei einer weiteren vorteilhaften Ausführungsform weist der Befestigungsmechanismus eine Vorspanneinrichtung auf, welche das Löseelement in eine vorgegebene Richtung drängt. Vorteilhaft handelt es sich hierbei um eine Richtung, welche eine Arretierposition bedingt. Vorteilhaft handelt es sich hierbei um eine Position, in der das Arretierelement in Richtung einer Ausnehmung zugestellt wird, um so eine Arretierung herzustellen. Bei einer weiteren bevorzugten Ausführungsform kann diese Vorspanneinrichtung auch in einem arretierten Zustand des Bodenteils dieses Bodenteil auf den Träger zu spannen.

Bei einer weiteren vorteilhaften Ausführungsform weist die Vorrichtung einen Bodenteilzwischenträger auf, an dem eine Ausnehmung angeordnet ist, in der wiederum zumindest Teile der Befestigungseinrichtung angeordnet sind.

Bei einer weiteren vorteilhaften Ausführungsform weist die Befestigungseinrichtung einen Aufnahmeraum zur Aufnahme eines Pneumatikmediums auf. Wenn dieser Aufnahmeraum mit einem Pneumatikmedium und insbesondere mit Druckluft beaufschlagt wird, kann hierdurch das Löseelement bewegt werden. Es wäre jedoch auch denkbar, dass das Löseelement unter Verwendung magnetischer Kräfte bewegt wird.

Bei einer weiteren vorteilhaften Ausführungsform ist wenigstens das Bodenteil und/oder wenigstens ein Seitenteil (und bevorzugt beide Seitenteile) automatisch von dem jeweiligen Träger, an dem dieses Bodenteil oder dieses Seitenteil angeordnet ist, entfernbar. Verfahrensseitig wird bevorzugt das Lösen des Bodenteils oder Seitenteils von dem Träger und/oder das Befestigen des Bodenteils oder Seitenteils an dem Träger automatisch durchgeführt. Zu diesem Zweck kann beispielsweise eine Robotereinrichtung die Blasformeinrichtung greifen, es können die Befestigungsmechanismen gelöst werden und die Blasformeinrichtung kann von der Umformungsstation entnommen werden. Bevorzugt kann dabei die Blasformeinrichtung in ihrer Gesamtheit von der Umformungsstation entnommen werden.

Bei einer weiteren bevorzugten Ausführungsform ist die Betätigung des Befestigungsmechanismus für den Boden mit der Betätigung des Befestigungsmechanismus für wenigstens ein Seitenteil gekoppelt. Eine derartige Kopplung kann dabei pneumatisch erfolgen, es wäre jedoch auch denkbar, dass diese Kopplung hydraulisch oder über eine (elektronische) Steuerung erfolgt. Auf diese Weise ist es möglich, insbesondere automatisch sämtliche Befestigungsmechanismen im Wesentlichen, aber nicht zwingendgleichzeitig, jedoch in einem Arbeitsschritt zu lösen (um dann die Blasform entnehmen zu können) oder zu verriegeln (um so die Blasform an der Umformungsstation anordnen zu können).

Die vorliegende Erfindung ist weiterhin auf ein Verfahren zum Betreiben einer Vorrichtung zum Umformen von Kunststoffvorformlingen zu Kunststoffbehältnissen gerichtet, wobei in einem Arbeitsbetrieb die Kunststoffvorformlinge durch Beaufschlagung mit einem fließfähigen Medium innerhalb einer Blasformeinrichtung expandiert werden und wenigstens ein Bodenteil und/oder wenigstens ein Seitenteil dieser Blasformeinrichtung von einem fließfähigen Temperiermedium durchströmt wird, wobei dieses Temperiermedium dem Bodenteil und/oder dem Seitenteil mittels einer Anschlusseinrichtung zugeführt wird, und das Bodenteil und/oder das Seitenteil mittels eines Befestigungsmechanismus an einem Träger befestigt ist bzw. wird.

Erfindungsgemäß weist dieser Befestigungsmechanismus ein in einer vorgegebenen geraden Richtung verschiebbares Löseelement auf, und durch eine Verschiebung dieses Löseelements in eine erste vorgegebene Position wird die Befestigung des Bodenteils und/oder des Seitenteils an dem (jeweiligen) Träger gelöst und durch eine Verschiebung dieses Löseelements in eine zweite vorgegebene Position das Bodenteil und/oder das Seitenteil an dem (jeweiligen) Träger befestigt.

Bevorzugt kann durch eine Entfernung des Bodenteils und/oder des Seitenteils von dem Träger auch die Anschlusseinrichtung getrennt werden und so besonders bevorzugt eine Verbindung zwischen dem Bodenteil bzw. dem Seitenteil und einer Temperiermediumversorgung getrennt werden. Weiterhin kann bevorzugt durch eine Zustellbewegung des Bodenteils bzw. des Seitenteils auf den Träger zu einer Temperiermediumversorgung hergestellt werden.

Bei einem weiteren vorteilhaften Verfahren wird dem Bodenteil das Temperiermedium mittels einer ersten Anschlusseinrichtung zugeführt und mittels einer zweiten Anschlusseinrichtung von dem Bodenteil abgeführt und bei einer Montage oder Demontage des Bodenteils von dem Träger werden Anschlusselemente der ersten Anschlusseinrichtung und Anschlusselemente der zweiten Anschlusseinrichtung zeitversetzt miteinander verbunden oder voneinander gelöst.

Weitere Vorteile und Ausführungsformen ergeben sich aus den beigefügten Zeichnungen:
Darin zeigen:
- Fig. 1: eine Darstellung einer Umformungseinrichtung;
- Fig. 2: eine Schnittdarstellung einer Umformungseinrichtung;
- Fig. 3: eine Detaildarstellung der in Fig. 2 gezeigten Umformungseinrichtung;
- Fig. 4: eine weitere Detaildarstellung der in Fig. 2 gezeigten Umformungseinrichtung; und
- Fig. 5: eine weitere Detaildarstellung der in Fig. 2 gezeigten Umformungseinrichtung.

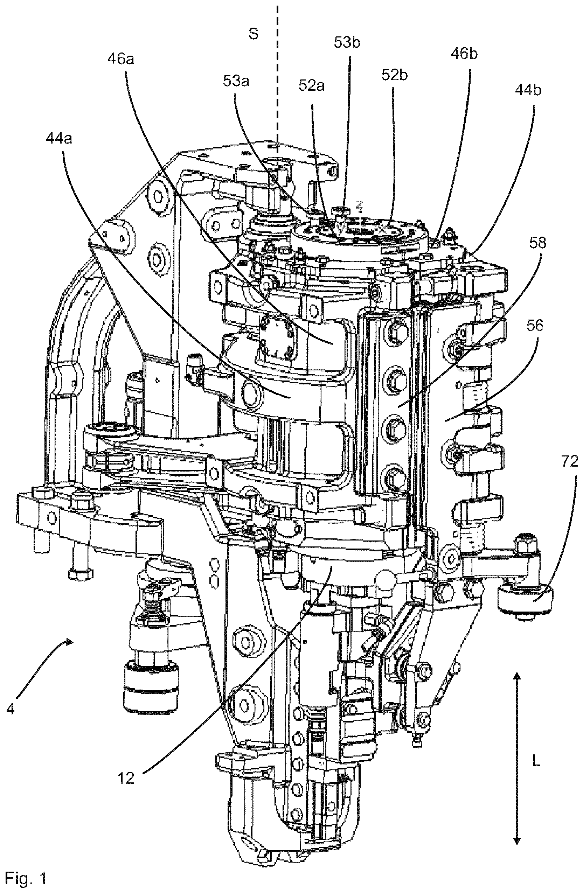

Figur 1 zeigt eine Umformungsstation 4 einer erfindungsgemäßen Umformungseinrichtung (nicht in der Gesamtheit dargestellt) in einem geschlossenen Zustand. Diese Umformungseinrichtung 1 weist dabei ein erstes Blasformträgerteil 44a sowie ein zweites Blasformträgerteil 44b auf. Diese beiden Teile können bezüglich einer hier vertikal verlaufenden Schwenkachse S auseinandergeklappt werden, um so einen Kunststoffvorformling in eine Blasform eingeben zu können. An diesen beiden Blasformträgerteilen 44a, 44b sind Blasformträgerschalen 46a und 46b angeordnet. Dabei können auch diese Blasformträgerschalen mittels eines (Schnell-) Befestigungsmechanismus befestigt sein. Dieser Schnellbefestigungsmechanismus kann dabei ebenfalls automatisch betätigbar sein.

An den Blasformträgerschalen 46a, 46b sind jeweils wiederum Blasformseitenteile 52a und 52b angeordnet. Die Bezugszeichen 53a und 53b kennzeichnen Vorsprünge bzw. Greifelemente, an denen die Blasformen von einem Wechselautomaten, wie einem Roboter gegriffen und angehoben werden können.

Die Bezugszeichen 56 und 58 beziehen sich auf zwei Verriegelungselemente, die zum Verriegeln der Blasform dienen. Dabei ist ein Verriegelungselement 58 an dem Blasformträgerteil 44a angeordnet und das andere Verriegelungselement, welches bezüglich einer vertikalen Achse schwenkbar ist, ist an dem Blasformträgerteil 44b angeordnet. Über eine Kurvenrolle 72 kann ein Öffnen und Schließen dieses Verriegelungsmechanismus erreicht werden.

Das Bezugszeichen 12 kennzeichnet einen Träger, an dem die Blasform angeordnet ist. Diese Träger kann- insbesondere in einem Arbeitsbetrieb der Vorrichtung - über einen Antrieb, wie beispielsweise einen motorischen oder auch einen hydraulischen oder pneumatischen Antrieb (insbesondere zum Schließen und Öffnen der Blasform) angehoben und abgesenkt werden.

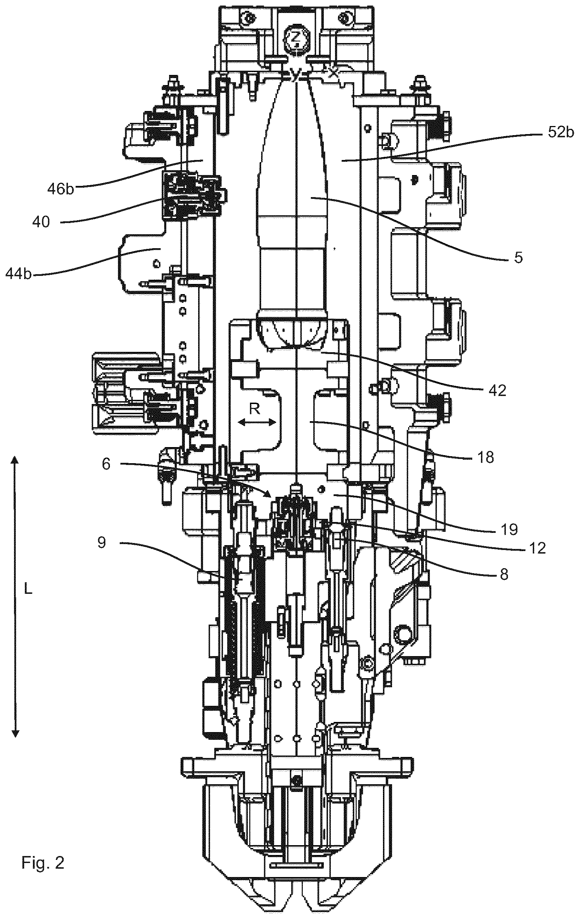

Figur 2 zeigt eine Schnittdarstellung der Umformungsstation 1. Man erkennt hier wieder das Blasformteil 52b, welches an einer Blasformträgerschale 46b sowie einem Blasformträger 44b angeordnet ist. Das Bezugszeichen 40 kennzeichnet den Befestigungsmechanismus, mittels dessen das Blasformträgerschalenteil an dem Blasformträgerteil 46b angeordnet ist. In dem Hohlraum 5 kann ein Kunststoffvorformling durch Beaufschlagung mit Druckluft zu dem Kunststoffbehältnis expandiert werden. Zu diesem Zweck wird, wie oben erwähnt, an die Mündung des Kunststoffvorformlings Druckluft angelegt.

Das Bezugszeichen 42 kennzeichnet ein Bodenteil der Blasform, welches ebenfalls den Hohlraum 5 begrenzt. Dieses Bodenteil 42 ist an einem Zwischenträger 18 angeordnet, der auch für eine Anpassung an unterschiedliche Behältnisgattungen dient. Der Zwischenträger 18 wiederum ist an einem Befestigungsteil 19 befestigt und dieses wiederum über den erfindungsgemäßen Befestigungsmechanismus an dem Trägerteil 12.

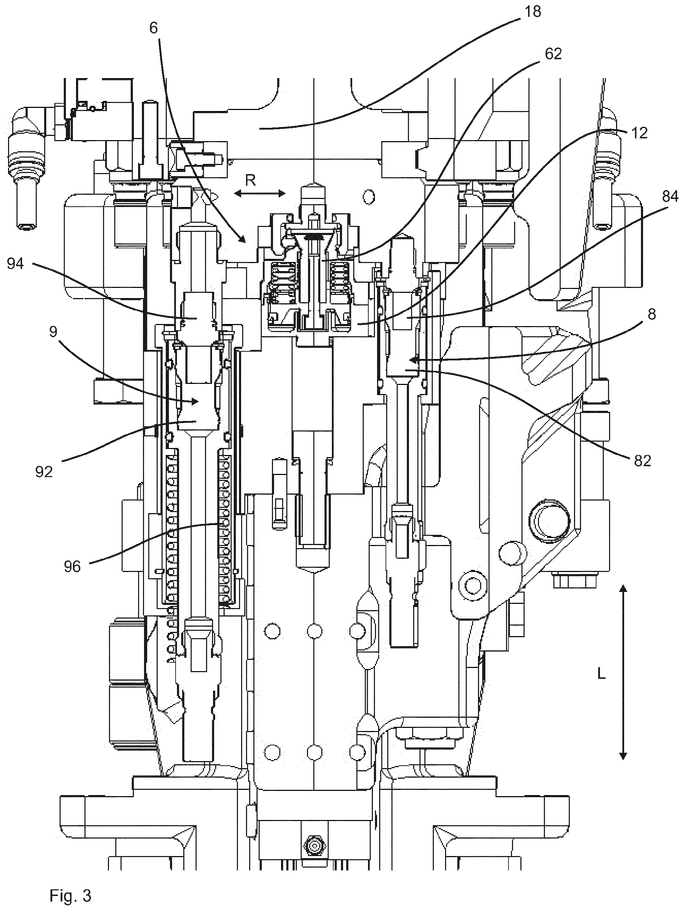

Die Bezugszeichen 8 und 9 kennzeichnen schematisch Anschlusseinrichtungen, welche zur Zufuhr eines Kühlmediums dienen. Innerhalb des Befestigungsteils 19 verlaufen die entsprechenden Fluidkanäle (nicht gezeigt) zunächst radial nach innen, anschließend ebenfalls in vertikaler Richtung durch den Zwischenträger 18 und gelangen auf diese Weise in das Bodenteil 42, um dieses zu temperieren. Bevorzugt weist daher auch das Bodenteil 42 (nicht gezeigte) Temperiermediumkanäle auf
Figur 3 zeigt eine Detaildarstellung der in Fig. 2 gezeigten Vorrichtung. Dabei bezieht sich das Bezugszeichen 6 in seiner Gesamtheit auf den Befestigungsmechanismus. Dieser Befestigungsmechanismus weist hier ein Löseelement 62 auf, welches in vertikaler Richtung bzw. in der Längsrichtung L bewegbar ist. Auch das Abnehmen der Blasform erfolgt in dieser Richtung. Auch werden durch diese Bewegung in der gleichen Richtung die Anschlusseinrichtungen 8 bzw. deren Anschlusselemente 82 und 84 bzw. 92 und 94 voneinander getrennt. Das Löseelement bzw. Stellelement kann durch Beaufschlagung mit Druckluft angehoben werden, wie unten genauer erläutert, um die Arretierung zwischen dem Träger 12 und dem Befestigungsteil 19 und damit auch die Arretierung mit dem Bodenteil der Blasformeinrichtung zu lösen. Das Befestigungsteil 19 kann dabei als scheibenartiger Körper ausgeführt sein, der beispielsweise an dem Zwischenträger angeschraubt ist. Dieses Befestigungsteil wird bei einem Wechsel des Bodenteils 42 gemeinsam mit dem Bodenteil 42 und dem Zwischenträger 18 abgenommen. Das Bezugszeichen R kennzeichnet eine zu der Längsrichtung L senkrecht stehende Richtung. In dieser Richtung können beispielsweise die Seitenteile von ihren jeweiligen Trägern entnommen werden.

In Figur 3 bezieht sich das Bezugszeichen 96 auf ein Federelement, welches das Anschlusselement 92 nach oben vorspannt. Auf diese Weise kann ein zeitlich versetztes Lösen der beiden Anschlusseinrichtungen 8, 9 erreicht werden.

Der in den Fig. 3 - 5 genauer gezeigte Befestigungsmechanismus kann in entsprechend auch zur Befestigung der Seitenteile an deren Träger d.h. insbesondere der Blasformträgerschalen verwendet werden. In diesem Falle sind jedoch die jeweils gezeigten Befestigungsmechanismen 6 in einer Stellung angeordnet, die gegenüber der gezeigten Stellung im Wesentlichen um 90° gedreht ist.

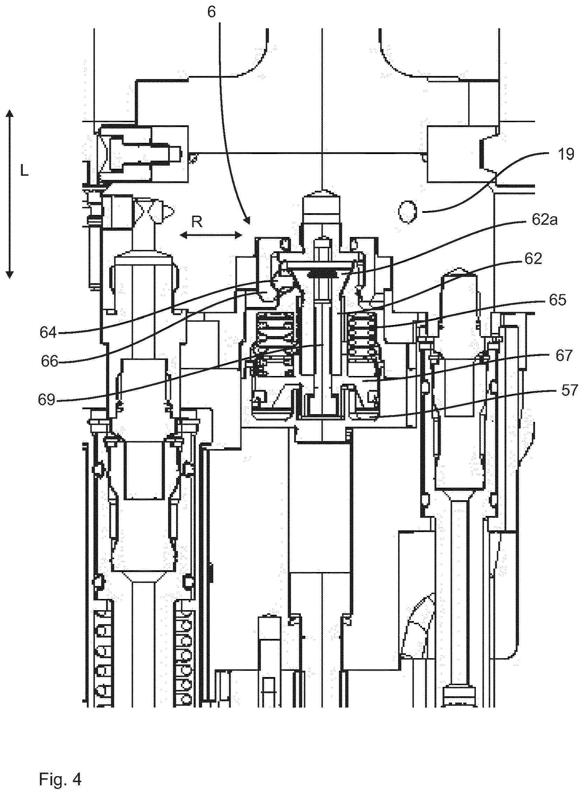

Figur 4 veranschaulicht genauer die Funktionsweise des Befestigungsmechanismus 6. Das Löseelement 62 wird im normalen Betriebszustand durch ein Federelement 65 nach unten gedrückt. Auf diese Weise wird durch die Schrägfläche 62a das Arretierelement 64 nach außen gedrückt und greift auf diese Weise in das Befestigungselement 66 ein. Durch diesen Eingriff kann eine Trennung zwischen dem Element 72 und dem Träger 12 verhindert werden. Falls nun der Aufnahmeraum 67 mit Druckluft beaufschlagt wird, wird sich das Stellelement 62 nach oben bewegen und auf diese Weise wird sich auch das Arretierelement 64 wieder zurückziehen und daher nicht mehr in Eingriff mit dem Befestigungselement 66 stehen. In dieser Position kann das Befestigungsteil 19 und damit auch das Bodenteil hier in der Richtung L nach oben abgehoben werden. Gleichzeitig werden hierdurch auch die Anschlusseinrichtungen getrennt, wenn auch zeitlich verzögert. Das Bezugszeichen 69 bezieht sich auf eine Führungseinrichtung, welche zum Führen des Löseelements 62 dient. Diese Führungseinrichtung 69 kann dabei in eine Bohrung des Löseelements 62 eingreifen, so dass das Löseelement 62 gegenüber der Führungseinrichtung 69 gleiten kann, dabei jedoch durch diese Führungseinrichtung 69 geführt wird. Damit ist das Arretierelement in der in Fig. 4 gezeigten Richtung R bewegbar.

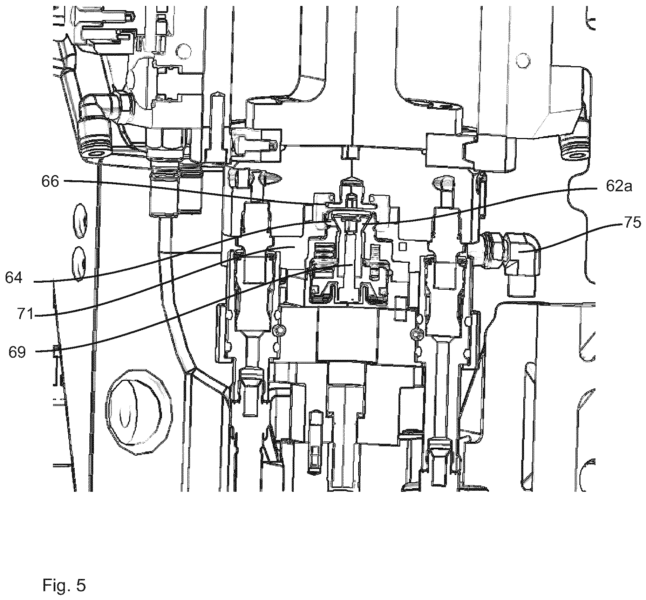

Figur 5 zeigt eine weitere Detaildarstellung des Befestigungsmechanismus. Man erkennt hier wiederum die Schrägfläche 62a, welche je nach Stellung des Stelleelementes bzw. Löseelements das Arretierelement 64 radial nach außen drückt. Das Bezugszeichen 75 kennzeichnet einen Anschluss zur Zuführung von Druckluft. Dieser Anschluss steht in Strömungsverbindung mit dem in Figur 4 gezeigten Aufnahmeraum 57, so dass durch Beaufschlagung mit Druckluft ein Lösen des Befestigungsmechanismus 6 erreicht werden kann. Durch das Federelement 65 wird jedoch erreicht, dass in einem Normalzustand das Bodenteil an dem Träger 12 arretiert ist.

### Bezugszeichenliste

- L: Längsrichtung
- R: von L abweichende Richtung
- 4: Umformungsstation
- 5: Hohlraum
- 6: Befestigungsmechanismus
- 8: Anschlusseinrichtung
- 9: Anschlusseinrichtung
- 12: Trägerteil
- 18: Zwischenträger
- 19: Befestigungsteil
- 40: Befestigungsmechanismus
- 42: Bodenteil
- 44a: erstes Blasformträgerteil
- 44b: zweites Blasformträgerteil
- 46a, 46b: Blasformträgerschale
- 52a,b: Blasformseitenteil
- 53a,b: Vorsprung bzw. Greifelement
- 56: Verriegelungselement
- 57: Aufnahmeraum
- 58: Verriegelungselement
- 62: Löseelement
- 62a: Schrägfläche
- 64: Arretierelement
- 65: Federelement
- 66: Befestigungselement
- 69: Führungseinrichtung
- 72: Kurvenrolle
- 75: Anschluss
- 82,84: Anschlusselement
- 92,94: Anschlusselement
- 96: Federelement

## Patentansprüche

1. Vorrichtung (1) zum Umformen von Kunststoffvorformlingen zu Kunststoffbehältnissen, mit wenigstens einer Umformungsstation (4), welche eine Blasform aufweist, innerhalb derer die Kunststoffvorformlinge durch Beaufschlagung mit einem gasförmigen Medium expandierbar sind, wobei die Blasform ein Bodenteil (42) aufweist, welches lösbar an einem Träger (12) angeordnet ist, und mit einem Befestigungsmechanismus (6), um das Bodenteil (42) an dem Träger (12) zu befestigen, wobei die Umformungsstation (4) wenigstens eine erste Anschlusseinrichtung (8) aufweist, um der Umformungsstation (4) ein fließfähiges Temperiermedium zuzuführen, und diese Zuführung des Temperiermediums über die Anschlusseinrichtung (8) durch eine Entfernung des Bodenteils (42) von dem Träger (12) trennbar ist
**dadurch gekennzeichnet, dass**
dieser Befestigungsmechanismus (6) ein in einer vorgegebenen geraden Richtung (L) verschiebbares Löseelement (62) aufweist, und durch eine Verschiebung dieses Löseelements (62) in eine erste vorgegebene Position die Befestigung des Bodenteils (42) an dem Träger (12) lösbar ist und durch eine Verschiebung dieses Löseelements (62) in eine zweite vorgegebene Position das Bodenteil (42) an dem Träger (12) befestigbar ist.

2. Vorrichtung (1) zum Umformen von Kunststoffvorformlingen zu Kunststoffbehältnissen, mit wenigstens einer Umformungsstation (4), welche eine Blasform aufweist, innerhalb derer die Kunststoffvorformlinge durch Beaufschlagung mit einem gasförmigen Medium expandierbar sind, wobei die Blasform wenigstens ein Seitenteil (52a, 52b), aufweist, welches lösbar an einem Träger (46a, 46b) angeordnet ist und mit einem Befestigungsmechanismus, um das Seitenteil (52a, 52b) an dem Träger (46a, 46b) zu befestigen,
**dadurch gekennzeichnet, dass**
dieser Befestigungsmechanismus ein in einer vorgegebenen geraden Richtung (L) verschiebbares Löseelement aufweist, und durch eine Verschiebung dieses Löseelements in eine erste vorgegebene Position die Befestigung des Seitenteils (52a, 52b) an dem Träger (46a, 46b) lösbar ist und durch eine Verschiebung dieses Löseelements in eine zweite vorgegebene Position das Seitenteil (52a, 52b) an dem Träger (46a, 46b) befestigbar ist.

3. Vorrichtung (1) nach Anspruch 1,
**dadurch gekennzeichnet, dass**
das Bodenteil (42) nach einem Lösen des Befestigungsmechanismus (6) durch eine Bewegung in einer geraden Richtung (L) entfernbar ist.

4. Vorrichtung (1) nach Anspruch 1,
**dadurch gekennzeichnet, dass**
die erste Anschlusseinrichtung (8) ein erstes Anschlusselement (82) sowie ein zweites Anschlusselement (84) aufweist, welche durch eine Relativbewegung eines Anschlusselements (82) gegenüber dem zweiten Anschlusselement (84) in einer geraden Richtung (L) miteinander koppelbar sind um der Umformungsstation (4) das fließfähige Temperiermedium zuzuführen.

5. Vorrichtung (1) nach Anspruch 1,
**dadurch gekennzeichnet, dass**
die Vorrichtung (1) eine zweite Anschlusseinrichtung (9) aufweist, um von der Umformungsstation (4) und insbesondere dem Bodenteil (42) das fließfähige Temperiermedium abzuführen, und diese Abführung durch eine Entfernung des Bodenteils (42) trennbar ist.

6. Vorrichtung (1) nach Anspruch 5,
**dadurch gekennzeichnet, dass**
die Anschlusseinrichtungen (8, 9) und/oder Anschlusselemente (82, 84) in der Richtung (L) versetzt zueinander angeordnet sind.

7. Vorrichtung (1) nach Anspruch 1,
**dadurch gekennzeichnet, dass**
der Befestigungsmechanismus (6) ein Arretierelement (64) aufweist, welches durch eine Bewegung des Löseelements (62) in der Richtung (L) zwischen wenigstens zwei Positionen bewegbar ist, wobei in einer dieser Positionen eine Arretierung zwischen dem Träger (12) und dem Bodenteil (42) hergestellt ist und in der anderen Position die Arretierung zwischen dem Träger (12) und dem Bodenteil (42) gelöst ist.

8. Vorrichtung (1) nach Anspruch 7,
**dadurch gekennzeichnet, dass**
das Arretierelement (64) durch die Bewegung des Löseelements (62) in einer von der Bewegungsrichtung (L) des Löseelements (62) abweichenden Richtung (R) bewegbar ist.

9. Vorrichtung (1) nach wenigstens einem der vorangegangenen Ansprüche,
**dadurch gekennzeichnet, dass**
der Befestigungsmechanismus (6) eine Vorspanneinrichtung (65) aufweist, welche das Löseelement (62) in eine vorgegebene Position drängt.

10. Vorrichtung (1) nach wenigstens einem der vorangegangenen Ansprüche,
**dadurch gekennzeichnet, dass**
der Befestigungsmechanismus (6) wenigstens abschnittsweise zwischen den Anschlusseinrichtungen angeordnet ist.

11. Vorrichtung (1) nach wenigstens einem der vorangegangenen Ansprüche,
**dadurch gekennzeichnet, dass**
das Löseelement automatisch betätigbar und/oder bewegbar ist.

12. Vorrichtung (1) nach Anspruch 11,
**dadurch gekennzeichnet, dass**
das Löseelement durch ein Fließmittel oder durch eine Magnetkraft betätigbar ist.

13. Vorrichtung (1) nach wenigstens einem der vorangegangenen Ansprüche,
**dadurch gekennzeichnet, dass**
wenigstens das Bodenteil (42) und/oder wenigstens ein Seitenteil (52a, 52b) automatisch von dem jeweiligen Träger (12, 46a, 46b), an dem dieses Bodenteil (42) oder dieses wenigstens eine Seitenteil (52a, 52b) angeordnet ist, entfernbar ist.

14. Verfahren zum Betreiben einer Vorrichtung zum Umformen von Kunststoffvorformlingen zu Kunststoffbehältnissen, wobei in einem Arbeitsbetrieb die Kunststoffvorformlinge durch Beaufschlagung mit einem fließfähigen Medium innerhalb einer Blasformeinrichtung expandiert werden und wenigstens ein Bodenteil (42) und/oder ein Seitenteil (52a, 52b) dieser Blasformeinrichtung von einem fließfähigen Temperiermedium durchströmt wird, wobei dieses Temperiermedium dem Bodenteil (42) und/oder dem Seitenteil (52a, 52b) mittels einer Anschlusseinrichtung zugeführt wird, und das Bodenteil (42) und/oder das Seitenteil (52a, 52b) mittels eines Befestigungsmechanismus (6) an einem Träger (12, 42a, 42b) befestigt ist,
**dadurch gekennzeichnet, dass**
dieser Befestigungsmechanismus (6) ein in einer vorgegebenen geraden Richtung (L) verschiebbares Löseelement (62) aufweist, und durch eine Verschiebung dieses Löseelements (62) in eine erste vorgegebene Position die Befestigung des Bodenteils und/oder des Seitenteils an dem Träger (12, 42a, 42b) gelöst wird und durch eine Verschiebung dieses Löseelements (62) in eine zweite vorgegebene Position das Bodenteil und/oder das Seitenteil (42, 52a, 52b) an dem Träger (12) befestigt wird.

15. Verfahren nach Anspruch 14,
**dadurch gekennzeichnet, dass**
dem Bodenteil (42) das Temperiermedium mittels einer ersten Anschlusseinrichtung zugeführt wird und mittels einer zweiten Anschlusseinrichtung von dem Bodenteil (42) abgeführt wird, und bei einer Montage oder Demontage des Bodenteils (42) von dem Träger (12) Anschlusselemente der ersten Anschlusseinrichtung und Anschlusselemente der zweiten Anschlusseinrichtung zeitversetzt miteinander verbunden oder voneinander gelöst werden.

## Claims

1. System (1) for transforming plastic parisons into plastic containers, with at least one transforming station (4) which has a blow mould within which the plastic parisons can be expanded by application of a gaseous medium, wherein the blow mould comprises a base part (42) which is disposed releasably on a support (12), and with a fastening mechanism (6) in order to fasten the base part (42) to the support (12), wherein the transforming station (4) has at least one first connector (8) in order to deliver a flowable temperature control medium to the transforming station (4), and this delivery of the temperature control medium can be separated from the support (12) by means of the connector (8) by removal of the base part (42),
**characterized in that**
this fastening mechanism (6) has a release element (62) which is movable in a predetermined straight direction (L), and by a displacement of this release element (62) into a first predetermined position the fastening of the base part (42) on the support (12) is releasable and by a displacement of this release element (62) into a second predetermined position the base part (42) can be fastened on the support (12).

2. System (1) for transforming plastic parisons into plastic containers with at least one transforming station (4) which has a blow mould within which the plastic parisons can be expanded by application of a gaseous medium, wherein the blow mould has at least one side part (52a, 52b) which is disposed releasably on a support (46a, 46b) and a fastening mechanism in order to fasten the side part (52a, 52b) to the support (46a, 46b),
**characterized in that**
this fastening mechanism has a release element which is movable in a predetermined straight direction (L), and by a displacement of this release element into a first predetermined position the fastening of the side part (52a, 52b) on the support (46a, 46b) is releasable and by a displacement of this release element into a second predetermined position the side part (52a, 52b) can be fastened on the support (46a, 46b).

3. System (1) according to claim 1,
**characterized in that**
after release of the fastening mechanism (6) the base part (42) can be removed by a movement in a straight direction (L).

4. System (1) according to claim 1,
**characterized in that**
the first connector (8) has a first connecting element (82) as well as a second connecting element (84), which can be coupled to one another by a relative movement of one connecting element (82) relative to the second connecting element (84) in a straight direction (L), in order to deliver the flowable temperature control medium to the transforming station (4).

5. System (1) according to claim 1,
**characterized in that**
the system (1) has a second connector (9), in order to draw off the flowable temperature control medium from the transforming station (4) and in particular the base part (42), and this drawing off can be disconnected by removal of the base part (42).

6. System (1) according to claim 5,
**characterized in that**
the connectors (8, 9) and/or connecting elements (82, 84) are disposed offset with respect to one another in the direction (L).

7. System (1) according to claim 1,
**characterized in that**
the fastening mechanism (6) has a locking element (64) which is movable by a movement of the release element (62) in the direction (L) between at least two positions, wherein in one of these positions the locking is produced between the support (12) and the base part (42) and in the other position the locking is released between the support (12) and the base part (42).

8. System (1) according to claim 7,
**characterized in that**
the locking element (64) can be moved by the movement of the release element (62) in a direction (R) which is different from the direction of movement (L) of the release element (62).

9. System (1) according to at least one of the preceding claims,
**characterized in that**
the fastening mechanism (6) has a pretensioning device (65) which pushes the release element (62) into a predetermined position.

10. System (1) according to at least one of the preceding claims,
**characterized in that**
the fastening mechanism (6) is disposed at least in part between the connectors.

11. System (1) according to at least one of the preceding claims,
**characterized in that**
the release element can be actuated and/or moved automatically.

12. System (1) according to claim 11,
**characterized in that**
the release element can be actuated by a flow medium or by a magnetic force.

13. System (1) according to at least one of the preceding claims,
**characterized in that**
at least the base part (42) and/or at least one side part (52a, 52b) can be removed automatically from the respective support (12, 46a, 46b) on which this base part (42) or this at least one side part (52a, 52b) is disposed.

14. Method for operating a system for transforming plastic parisons into plastic containers, wherein in a working operation the plastic parisons are expanded by application of a flowable medium within a blow moulding device, and a flowable temperature control medium flows through at least one base part (42) and/or a side part (52a, 52b) of this blow moulding device, wherein this temperature control medium is delivered to the base part (42) and/or the side part (52a, 52b) by means of a connector, and the base part (42) and/or the side part (52a, 52b) is fastened by means of a fastening mechanism (6) on a support (12, 42a, 42b),
**characterized in that**
this fastening mechanism (6) has a release element (62) which is movable in a predetermined straight direction (L), and by a displacement of this release element (62) into a first predetermined position the fastening of the base part and/or of the side part on the support (12, 42a, 42b) is released and by a displacement of this release element (62) into a second predetermined position the base part and/or the side part (42, 52a, 52b) can be fastened on the support (12).

15. Method according to claim 14,
**characterized in that**
the temperature control medium is delivered to the base part (42) by means of a first connector and drawn off from the base part (42) by means of a second connector, and when the base part (42) is installed on or removed from the support (12) connecting elements of the first connector and connecting elements of the second connector are connected to one another or released from one another with a time delay.

## Revendications

1. Dispositif (1) de transformation d'ébauches en matière plastique en contenants en matière plastique, comprenant au moins une station de façonnage (4), laquelle présente un moule de soufflage à l'intérieur duquel les ébauches en matière plastique peuvent se dilater en étant soumises à l'effet d'un milieu gazeux, dans lequel le moule de soufflage comprend une partie de fond (42), laquelle est agencée de manière amovible sur un support (12), et comprend un mécanisme de fixation (6), afin de fixer la partie de fond (42) au support (12), dans lequel la station de façonnage (4) comprend au moins un premier dispositif de raccordement (8), afin d'amener un milieu de thermorégulation coulant à la station de façonnage (4), et cette amenée du milieu de thermorégulation par l'intermédiaire du dispositif de raccordement (8) peut être interrompue en retirant la partie de fond (42) du support (12),
**caractérisé en ce que**
ce mécanisme de fixation (6) comprend un élément de libération (62) pouvant coulisser dans une direction rectiligne prédéfinie (L), et, à la suite d'un coulissement de cet élément de libération (62) dans une première position prédéfinie, la fixation de la partie de fond (42) au support (12) peut être libérée et, à la suite d'un coulissement de cet élément de libération (62) dans une deuxième position prédéfinie, la partie de fond (42) peut être fixée au support (12).

2. Dispositif (1) de transformation d'ébauches en matière plastique en contenants en matière plastique, comprenant au moins une station de formage (4), laquelle présente un moule de soufflage à l'intérieur duquel les ébauches en matière plastique peuvent être dilatées en étant soumises à l'effet d'un milieu gazeux, dans lequel le moule de soufflage comprend au moins une partie latérale (52a, 52b), laquelle est agencée de manière amovible sur un support (46a, 46b), et le dispositif comprend également un mécanisme de fixation, afin de fixer la partie latérale (52a, 52b) au support (46a, 46b),
**caractérisé en ce que**
ce mécanisme de fixation comprend un élément de libération pouvant coulisser dans une direction rectiligne prédéfinie (L), et, à la suite d'un coulissement de cet élément de libération dans une première position prédéfinie, la fixation de la partie latérale (52a, 52b) au support (46a, 46b) peut être libérée et, à la suite d'un coulissement de cet élément de libération dans une deuxième position prédéfinie, la partie latérale (52a, 52b) peut être fixée au support (46a, 46b).

3. Dispositif (1) selon la revendication 1,
**caractérisé en ce que**
la partie de fond (42), une fois le mécanisme de fixation (6) détaché, peut être retirée à la suite d'un déplacement dans une direction rectiligne (L).

4. Dispositif (1) selon la revendication 1,
**caractérisé en ce que**
le premier dispositif de raccordement (8) comprend un premier élément de raccordement (82) ainsi qu'un deuxième élément de raccordement (84), lesquels, à la suite d'un mouvement relatif d'un élément de raccordement (82) par rapport au deuxième élément de raccordement (84) dans une direction rectiligne (L), peuvent être raccordés l'un à l'autre afin d'amener le milieu de thermorégulation coulant à la station de façonnage (4).

5. Dispositif (1) selon la revendication 1,
**caractérisé en ce que**
le dispositif (1) comprend un deuxième dispositif de raccordement (9), afin d'évacuer le milieu de thermorégulation coulant de la station de façonnage (4) et en particulier de la partie de fond (42), et cette évacuation peut être interrompue par un retrait de la partie de fond (42).

6. Dispositif (1) selon la revendication 5,
**caractérisé en ce que**
les dispositifs de raccordement (8, 9) et/ou les éléments de raccordement (82, 84) sont décalés les uns des autres dans la direction (L).

7. Dispositif (1) selon la revendication 1,
**caractérisé en ce que**
le mécanisme de fixation (6) comprend un élément de blocage (64), lequel, à la suite d'un déplacement de l'élément de libération (62) dans la direction (L), peut être déplacé entre au moins deux positions, dans lequel un blocage entre le support (12) et la partie de fond (42) est établi dans une de ces positions et dans l'autre position, le blocage entre le support (12) et la partie de fond (42) est libéré.

8. Dispositif (1) selon la revendication 7,
**caractérisé en ce que**
l'élément de blocage (64), à la suite du déplacement de l'élément de libération (62), peut être déplacé dans une direction (R) différente de la direction de déplacement (L) de l'élément de libération (62).

9. Dispositif (1) selon au moins l'une des revendications précédentes,
**caractérisé en ce que**
le mécanisme de fixation (6) comprend un dispositif de précontrainte (65), lequel pousse l'élément de libération (62) dans une position prédéfinie.

10. Dispositif (1) selon au moins l'une des revendications précédentes,
**caractérisé en ce que**
le mécanisme de fixation (6) est agencé au moins en partie entre les dispositifs de raccordement.

11. Dispositif (1) selon au moins l'une des revendications précédentes,
**caractérisé en ce que**
l'élément de libération peut être actionné et/ou déplacé automatiquement.

12. Dispositif (1) selon la revendication 1,
**caractérisé en ce que**
l'élément de libération peut être actionné par un fluidifiant ou par une force magnétique.

13. Dispositif (1) selon au moins l'une des revendications précédentes,
**caractérisé en ce que**
au moins la partie de fond (42) et/ou au moins une partie latérale (52a, 52b) peuvent être retirées automatiquement du support (12, 46a, 46b) respectif, sur lequel cette partie de fond (42) ou ladite au moins une partie latérale (52a, 52b) est agencée.

14. Procédé permettant de faire fonctionner un dispositif de transformation d'ébauches en matière plastique en récipients en matière plastique, dans lequel les ébauches en matière plastique, au cours d'un mode de travail, sont dilatées à l'intérieur d'un dispositif de moulage par soufflage en étant soumis à l'effet d'un milieu coulant et au moins une partie de fond (42) et/ou une partie latérale (52a, 52b) de ce dispositif de moulage par soufflage sont traversées par un milieu de thermorégulation coulant, dans lequel ce milieu de thermorégulation est amené à la partie de fond (42) et/ou à la partie latérale (52a, 52b) au moyen d'un dispositif de raccordement, et la partie de fond (42) et/ou la partie latérale (52a, 52b) est fixée à un support (12, 42a, 42b) au moyen d'un mécanisme de fixation (6),
**caractérisé en ce que**
ce mécanisme de fixation (6) comprend un élément de libération (62) pouvant coulisser dans une direction rectiligne (L) prédéfinie, et, à la suite d'un coulissement de cet élément de libération (62) dans une première position prédéfinie, la fixation de la partie de fond et/ou de la partie latérale au support (12, 42a, 42b) est libérée et, à la suite d'un coulissement de cet élément de libération (62) dans une deuxième position prédéfinie, la partie de fond et/ou la partie latérale (42, 52a, 52b) est fixée au support (12).

15. Procédé selon la revendication 14,
**caractérisé en ce que**
le milieu de thermorégulation est amené à la partie de fond (42) au moyen d'un premier dispositif de raccordement et est évacué de la partie de fond (42) au moyen d'un deuxième dispositif de raccordement, et, lors d'un montage ou d'un démontage de la partie de fond (42) du support (12), des éléments de raccordement du premier dispositif de raccordement et des éléments de raccordement du deuxième dispositif de raccordement sont reliés les uns aux autres ou libérés les uns des autres avec un décalage temporel.
